# EUROPEAN PATENT APPLICATION

(11) **EP 3 944 754 A1**
(43) Date of publication of application: **02.02.2022**
(21) Application number: 21188440.8
(22) Date of filing: 29.07.2021
(51) Int. Cl.: A01G 9/12

(54) **SUPPORT FOR FLOWERING PLANT**

(30) Priority: 29.07.2020 GB 202011784
(71) Applicant: Kearns, Thomas, Epsom, Surrey KT18 7HY (GB)
(72) Inventor: Kearns, Thomas, Epsom, Surrey KT18 7HY (GB)
(74) Representative: Richards, Michèle E.

(57) **Abstract**

The invention provides a support for a flower located on a stem of a plant, comprising:
a clip (10) adapted to be placed around a stake (40) and at least partially surround the stake in close contact, the clip (10) further including at least one arm (16) extending radially outward from a centre axis of the clip, and
one or more stem support means (12) attached to the arm.

The invention also provides a kit, comprising the support, including a clip (10) and one or more stem supports means (12) and a stake (40).

## Description

The present invention relates to gardening apparatus, more particularly to a support or prop for a flowering plant.

Conventionally, a stake is fixed in the ground next to the stem of a flower or plant and at or near the upper end of the stake is provided a holder or clip adapted to encircle the stem and hold it in the vertical position. However, this does not provide support to the proximal stem which can still bend due to the weight of the blooming flower causing the flower head to droop.

It is desirable to provide a support that maintains the look of flowers as fresh as possible to maximize the enjoyment of the flowers. It is also desirable to provide a flower support that is easily attached to the stem without damaging the plant and also provides sufficient support to the proximal stem and flower head so as to maintain and extend the desirable appearance of the flower. It is with these considerations in mind that the present invention is contemplated.

Accordingly, one aspect the present invention provides a support for a flowering plant, comprising:
a clip adapted to be placed around a stake and at least partially surround the stake in close contact, the clip further including at least one arm extending radially outward from a centre axis of the clip, and one or more stem support means attached to the arm.

Preferably, the at least one arm comprises an aperture for receiving the stem support means to detachably mount the stem support means to the arm. The aperture conveniently slideably receives the stem support means.

In one embodiment, the aperture for receiving the stem support means passes transversely through the arm. A plurality of apertures may be provided in the, or each, arm and preferably spaced apart longitudinally.

In an alternative embodiment, the at least one arm extends both radially outward and upward from the centre axis of the clip. In this embodiment, the arm may comprise an aperture for receiving the stem support means in the form of a bore extending longitudinally within the arm.

In a further alternative embodiment, the at least one arm extends radially outward from a centre axis of the clip and forms an arc portion at its proximal end around the centre axis.

Preferably, the clip has two, three, four, five or more arms and the arms may be equally spaced apart from each other.

Preferably, the stem support means comprises an elongate body having a first end for supporting the proximal stem of the plant and a second end for attachment to the arm of the clip. The first end of the stem support means may be formed into an open or closed loop, a hook, a V-shape, a U-shape, a wave form, or any other suitable shape for engaging a proximal stem or peduncle of the plant.

The elongate body of the stem support means preferably tapers towards its second end. In this way, the stem support means can be easily located in the aperture or bore formed in the arm of the clip by its second end. In the embodiment wherein the aperture extends transversely through the arm, the elongate body of the stem support means is prevented from slipping downwards through the aperture by interference where the wider part of the elongate body touches the side walls forming the aperture. In addition, the weight of the proximal stem with attached flower head and/or leaves bearing down on the first end of the stem support means prevents the second end of the stem support means from slipping upwards out of the aperture or bore.

Preferably, the first end of the stem support means lies in the same plane as its elongate body. Alternatively, the first end of the stem support means is at an angle or about perpendicular to the longitudinal axis of its elongate body.

Preferably, the clip further comprises a locking feature having projections on an inner and an outer peripheral surface and a latch to lock engaged projections together. The clip is adjustable to any height and to surround stakes of various diameters in close contact.

The plant support preferably further comprises a stake or vertical prop having one end for fixing into a ground mixture.

According to another aspect of the present invention, there is provided a stem support means for a flowering plant, comprising a rod member having one end shaped to receive the proximal stem of the plant to support the flower head in a substantially vertical position and its other end adapted to be releasably connected to a stake clip adapted to be placed around a stake and at least partially encircle the stake in close contact.

The first end of the support means shaped to receive the proximal stem, such as the peduncle, of a flowering plant is preferably formed into an open or closed loop, a hook, a V-shape, a U-shape or a wave form.

According to another aspect of the present invention, there is provided a stake clip for use with a stem support means as described herein, the clip comprising a sleeve portion adapted to be placed around a stake to at least partially surround the stake in close contact and having an opening, and the clip further comprising at least one arm extending radially outward from a centre axis of the sleeve portion, wherein the arm includes one or more apertures for receiving the stem support means.

According to another aspect of the present invention, there is provided a stake for supporting a plant in a ground mixture, the stake comprising a first section having one end for fixing in the ground mixture and another opposite end provided with a central hole serving as a female connector or a coaxial stem acting as a male connector, and a second section having one end provided with a central hole serving as a female connector and another opposite end provided with a coaxial stem acting as male connector. The female connector of each section is sized to receive and hold the male connector of another section.

Preferably, the stake further comprises locking means at its ends to lock engaged sections together. The locking means may be achieved by means of a screw thread provided in the interior of the female connector and on the exterior of the male connector. Alternatively, the locking means may be achieved by means of spring loaded detent in the male or female connector of one section engaging an aperture in the respective female or male connector of another section. The detent is biased to an extended position and to unlock the locking means, the detent is manually depressed while the engaged ends are twisted in opposite directions about the longitudinal axis of the stake.

The height of the stake can be adjusted to the height of the plant by using additional sections, each section has one end provided with a central hole acting as a female connector and a second opposite end provided with a coaxial stem acting as a male connector.

According to another aspect of the present invention, there is provided a kit for supporting a proximal stem of a plant, the kit comprising: a clip member adapted to be placed around a stake and at least partially surround the stake in close contact, the clip comprising at least one arm extending radially outward from a centre axis of the clip; one or more stem support means for attachment to the arm; and, optionally, a stake.

In one embodiment, the kit comprises a main stake for fixing into a ground mixture and a secondary stake for attachment to the arm of the clip member. The end of the secondary stake for attachment to the arm of the clip member may be tapered such that it can be received and held in the aperture or bore formed in the arm of the clip member.

The flowering plant support according to the present invention provides support for the proximal stem of the flower. By holding the proximal stem or peduncle in a substantially vertical position, the support improves the appearance of the flowering plant. In addition, the plant support according to the present invention prevents the proximal stem and flower head of the plant from drooping which in turn may prevent the premature degradation of the nutrient transport system of the stem and thereby the useful life of the flower may be prolonged.

As used herein, the term "about" means in terms of size, in mm, plus or minus 1 or 2 mm.

The term "proximal stem" means a stem or stems in the upper half of a plant, including stems adjacent leaves, flowers and/or fruit.

Additional features and advantages of the present invention are described in, and will be apparent from, the description of the presently preferred embodiments which are set out below with reference to the drawings in which:
Figure 1 (a) shows a perspective view from above of one embodiment of a stake clip according to the present invention;
Figure 1 (b) shows a side elevation of the stake clip of Figure 1 (a);
Figure 2 shows a top plan view of another embodiment of a stake clip according to the present invention;
Figure 3 shows a top plan view of yet another embodiment of a stake clip according to the invention;
Figure 4 parts (a)-(g) show side elevations of various stem support members according to the present invention;
Figure 5 shows a perspective view of a secondary stake holder according to the present invention;
Figure 6 shows a perspective view of one embodiment of a stake according to the present invention; and
Figure 7 shows an enlarged perspective view of a part of the stake clip of Figures 1 to 3.

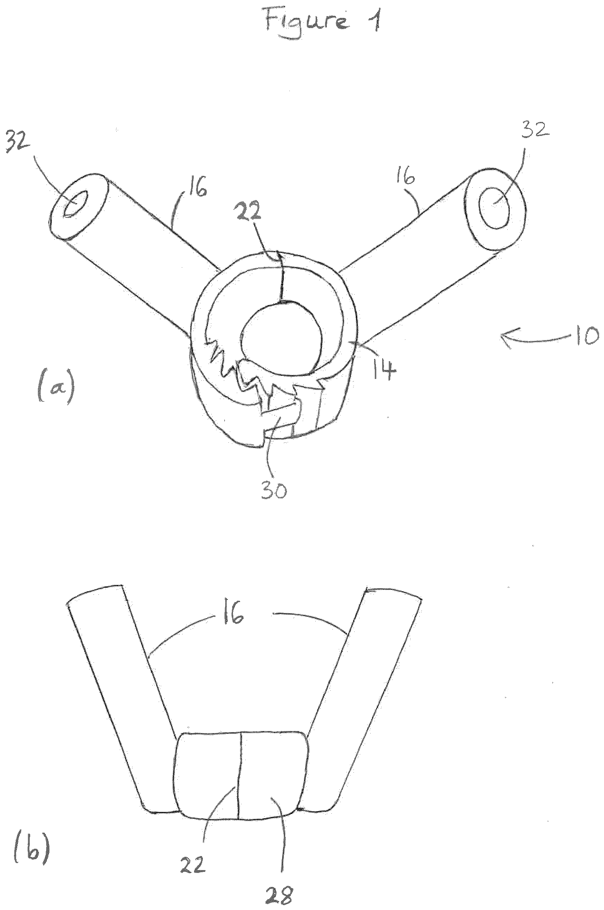

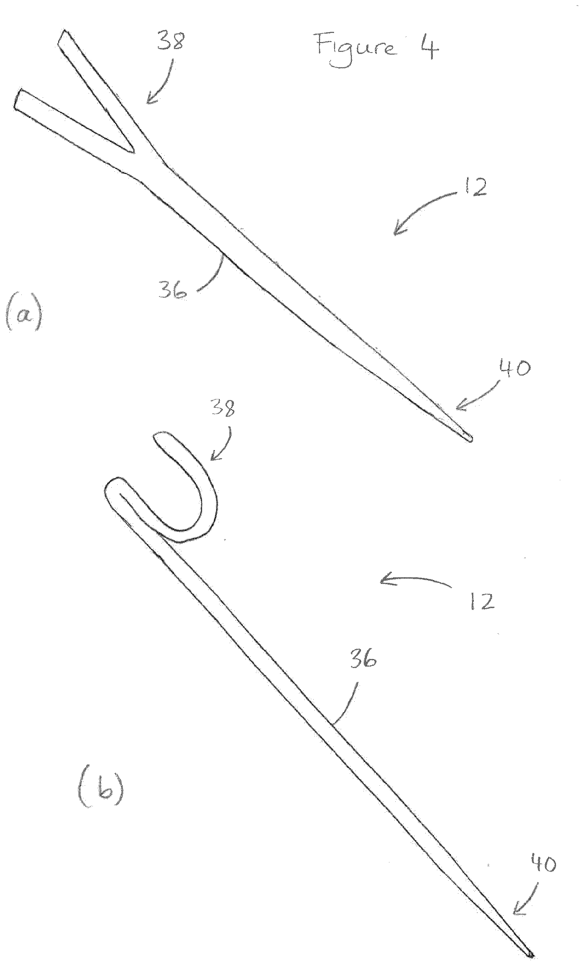

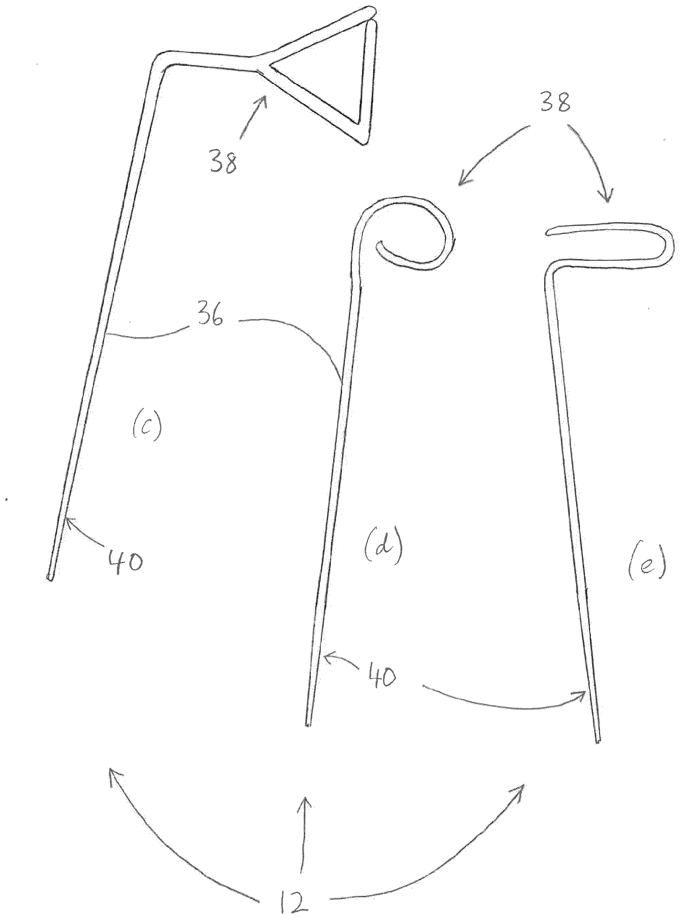

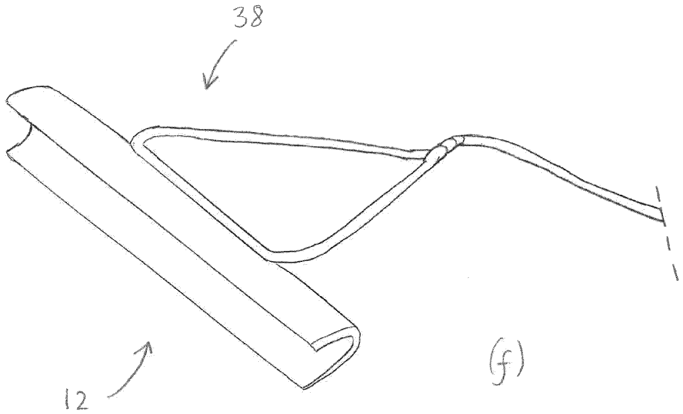

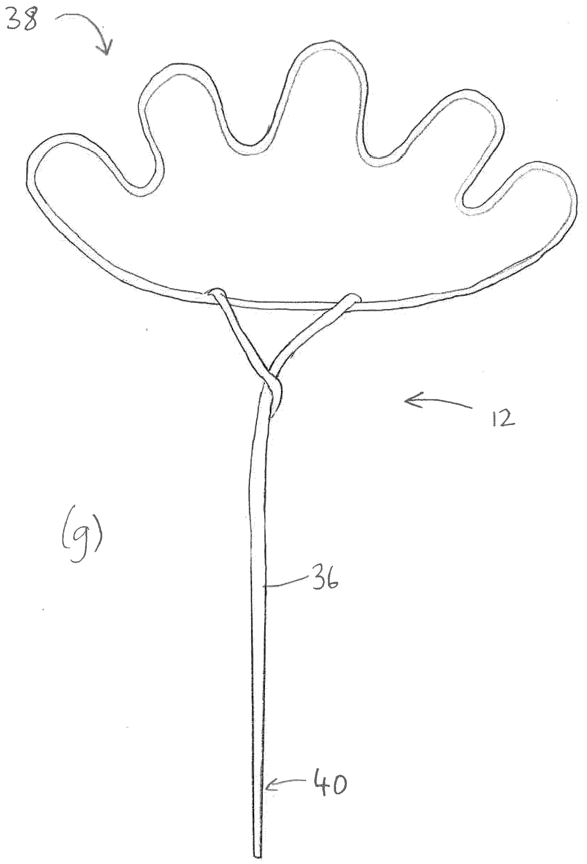

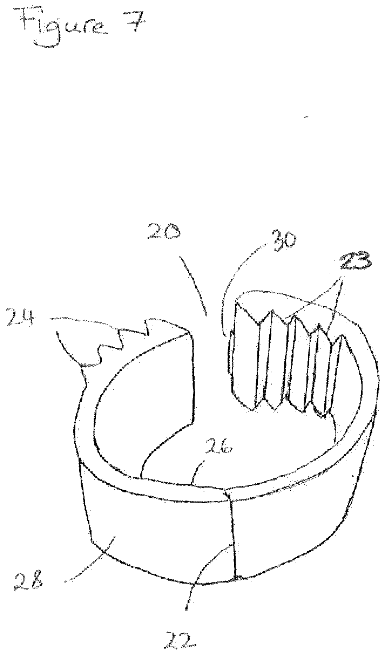

With reference to the Figures, a plant support is comprised essentially of two parts: a stake clip 10 as shown in Figures 1, 2 and 3 and a stem support member 12 as shown in Figure 4. The stake clip 10 has a generally cylindrical body 14 and integral projecting arms 16, 18. The clip may be made of any type of plastic or metal or similar material in which the clip may be opened, placed around a stake and then closed again to surround the stake. With reference to Figure 7, the cylindrical body 14 of the stake clip 10 contains an access opening 20 along its periphery. On the side opposite the opening, stake clip contains a hinge 22 that allows the clip 10 to be opened more easily. The opening 20 may be locked in a closed position through the use of a locking feature. In the embodiment illustrated, the locking feature consists of several ratchets 23, 24 on the respective inner 26 and outer 28 circumference of the free end portions of the stake clip that overlap and engage with each other and a locking latch 30 to inhibit movement of the clip 10 when in position. The clip 10 is thereby easily adjustable to any height along the stake. Several ratchets are provided so that the inner circumference of the clip may be closely approximated to the outer diameter of any stake. In other words, as the diameter of the stake clip is reduced during closing of the stake clip, successive ratchets will engage and be locked in the closed position depending on the size of the stake that is being encircled by the clip.

Other clips that can be locked in the closed position around a stake may be used. In another embodiment, for example, the clip may be made of a semi-flexible material that substantially maintains its shape. The opening extends from the top end of the clip to the bottom end and this clip forms a C-shape when viewed in cross-section. The clip may be placed onto the stake by pushing the stake through the opening of the clip. Since the clip is made of flexible material, it will expand to allow the stake to be inserted and then immediately close around the stake to hold it in place.

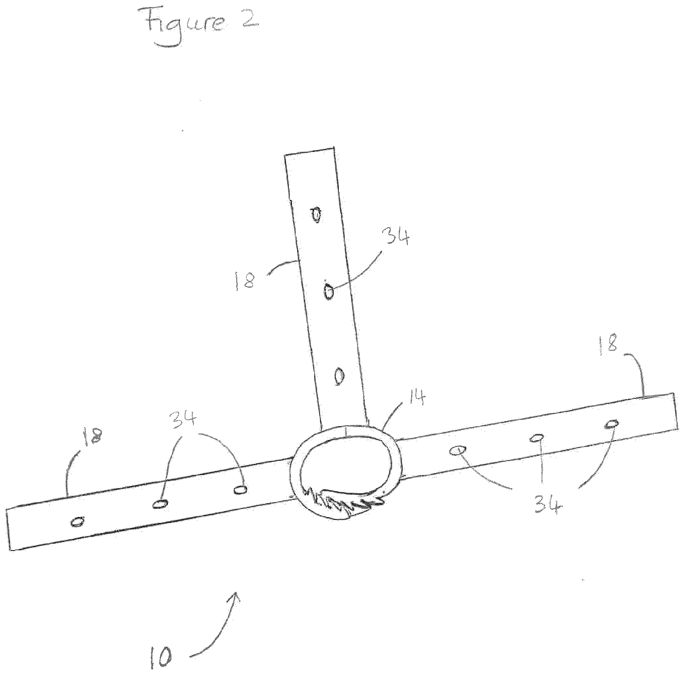

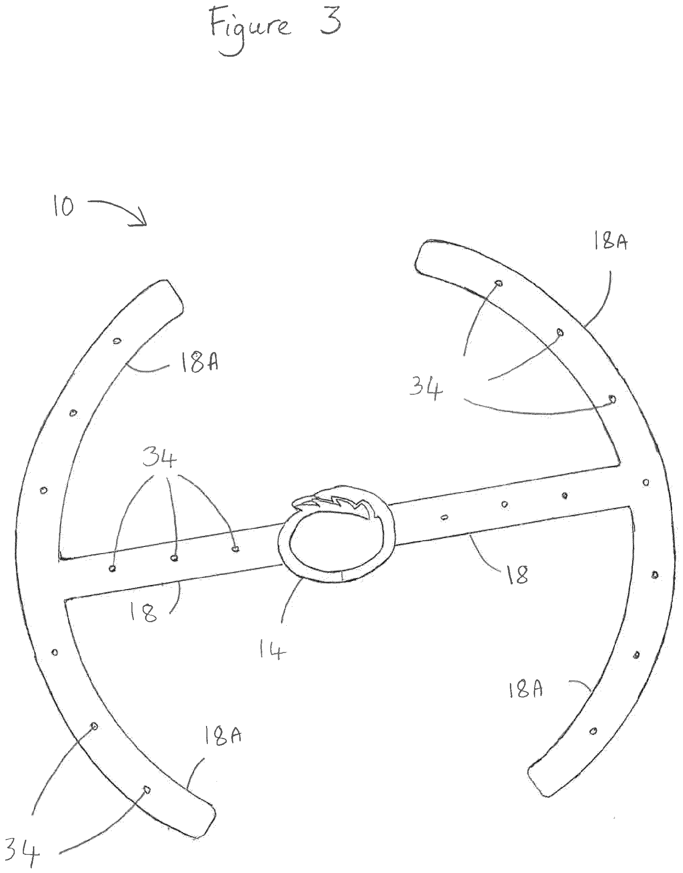

As illustrated in Figure 1, two opposed arms 16 are attached to the cylindrical body 14 of the clip 10 that extend radially outward and upward from the centre axis of the clip in use. In the alternative embodiment illustrated in Figure 2, the clip 10 includes three arms 18 that extend radially outward in a generally horizontal direction in use. In the further alternative embodiment shown in Figure 3, the clip 10 includes two arms that extend radially outward in a generally horizontal direction and then arc around the centre axis to provide arc portions 18 A. In the embodiment of Figure 1, each arm 16 is cylindrical having a longitudinal central bore 32 configured to receive a stem support member 12. In the embodiment of Figure 2, each arm 18 is in the form of a strip having three apertures 34 spaced longitudinally along the strip for receipt of respective stem support members 12. In the embodiment of Figure 3, the arms of the embodiment of Figure 2 further extend around the centre axis to form arc portions 18A having apertures 34 for receipt of respective stem support members 12 spaced along the portions 18A. The arms 16, 18 and 18A are formed of a rigid material such as plastic.

With reference to Figure 4, the stem support member 12 has a generally straight body part 36 and is shaped at its upper end 38 to receive the proximal stem of a flower. The body 36 tapers towards its lower end 40. Each support has a straight lower end 40 for insertion into an aperture 34 or bore 32 formed in arm of the clip 10. The stem support members 12 are in the form of rods or the like made of a rigid material such as plastic or heavy gauge metal.

The stem receiving end 38 of the support member 12 may be shaped into various forms as shown in Figures 4 (a) to (g), that is, a V-shape (Figure 4 (a)), a U-shape (Figure 4 (b) and (e)), a triangle (Figure 4 (c)), a loop (Figure 4 (d)) or a wave shape (Figure 4 (g)). This shaped end 38 of the support 12 is for engaging with the proximal stem or peduncle of a flower to support this part of the flowering plant and thereby also to prop up the flower head. The stem receiving end 38 may be at an angle relative to the straight main body part 36 as shown in Figures 4 (c), (d) and (e) or may lie in the same plane as the body 36 as shown in Figures 4 (a) and (b). The support 12 shown in Figure 4 (f) is configured for supporting young tree branches or larger stemmed flowers. It will be apparent that the stem receiving ends 38 of the supports 12 can take any suitable form to support and keep straight or vertical a proximal stem and thereby prop up an adjacent flower head or the like, and that the support may be adapted to support a single stem (Figure 4 (a) to (f)) or multiple stems (Figure 4 (g)).

The dimensions of the plant support can vary and will depend on the size and shape of the plant to be supported. As an example, the arms of the clip 10 may have a length of about 20 mm to about 80 mm, preferably about 40 mm to about 70 mm, more preferably about 30 mm to about 50 mm, and the stem support member 12 may have an elongate body of length from about 50 mm to about 150 mm, preferably 100 mm to about 120 mm, with a shaped portion having a length of about 10 mm to about 60 mm, preferably about 30 mm to about 40 mm.

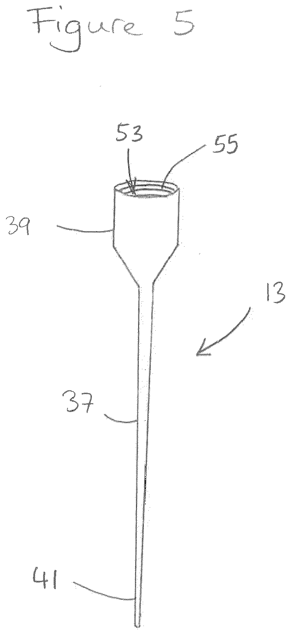

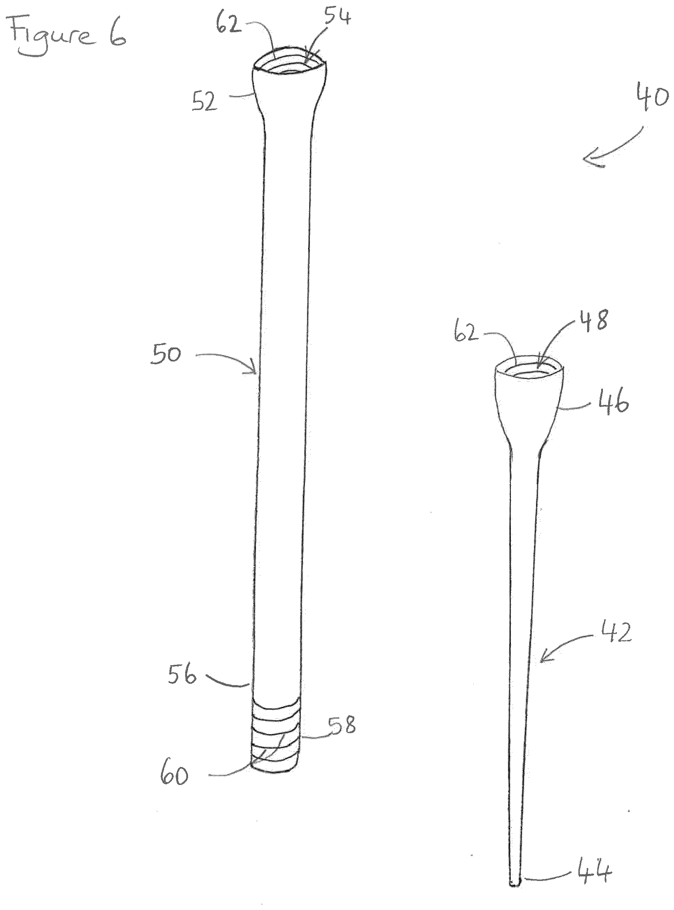

Figure 5 shows a holder for a secondary stake adapted to be attached to an arm 16, 18, 18A of the clip for allowing an additional stake to be provided to one side of the main stake 40 (Figure 6) without requiring the additional stake to be inserted into the ground. This is particularly useful for larger plants having proximal stems that extend over a wide area. The secondary stake holder 13 comprises an elongate body 37 having one pointed end 41 for insertion into a bore 32 or aperture 34 in the arm 16, 18, 18A, of the clip 10 and an opposite end 39 having a central hole 53 serving as a female connector. The female connector of the secondary stake holder 13 is formed with interior threads 55. The female connector is sized to receive and engage end 56 of a stake section 50. The end 56 of stake section 50 is provided with exterior threads 58 for this purpose. In this way, the female connector cooperatively threadedly engages the threaded male end 58 of the secondary stake section 50.

Figure 6 shows a stake 40 for supporting a plant consisting of two sections: a first section 42 having a pointed end 44 for fixing into a ground mixture and another opposite end 46 having a central hole 48 serving as a female connector; and a second section 50 having one end 52 provided with a central hole 54 serving as a female connector and another opposite end 56 provided with a coaxial stem 58 acting as male connector. The female connector of each section is sized to receive and hold the male connector of another section.

The central hole 48, 54 and the coaxial stem 58 include a locking feature comprising an exterior threaded portion 60 at the male connector end and an interior threaded portion 62 at the female connector end, whereby by turning in one direction the threaded portion 60 engages the threaded portion 62, thereby locking the sections 50, 42 together. To unlock the sections, the sections 50, 42 are turned in an opposite direction about the longitudinal axis of the stake 40.

The height of the stake 40 can be adjusted to the height of the plant by using additional sections, each section has one end provided with a central hole acting as a female connector and a second opposite end provided with a coaxial stem acting as a male connector.

In operation, stake clip 10 is hinged open, placed around the stake 40 and then closed so that projections 24 engage with recesses 23 and the engagement is locked with the latch 30. The clip 10 is closed so that the inner wall is in close contact with the stake 40 so that the clip is held in position and inhibited from movement on the stake. The clip 10 is placed on the stake 40 in the proper vertical position such that when the stem support 12 is in position on the arm 16, 18, 18A of the clip 10, the shaped end 38 of the support 12 comes in contact with the proximal stem such that the flower head is supported in the vertical position. Because the stem support 12 is easily detached from the arm 16, 18, 18A, and the clip 10 allows quick release and repositioning as necessary, the flower support 10, 12, 40 may be placed in the proper position very easily and adjusted as necessary as the plant grows.

Although the support has been described for use in engaging the proximal stem of a flowering plant to support the flower head in a vertical position, it will be apparent that the support can also be used to support other kinds of plants. Thus, the support may be used on varieties of plants that have stems too weak to support the weight of their branches and leaves and thus fold back on themselves, for example fruit bearing plants.

It should be understood that various changes and modifications to the presently preferred embodiments described herein will be apparent to those skilled in the art. Such changes and modifications can be made without departing from the scope of the present invention and without diminishing its attendant advantages. It is therefore intended that such changes and modifications are covered by the appended claims.

## Claims

1. A support for a flower located on a stem of a plant, comprising:
a clip adapted to be placed around a stake and at least partially surround the stake in close contact, the clip further including at least one arm extending radially outward from a centre axis of the clip, and
one or more stem support means attached to the arm.

2. A support according to claim 1, wherein the stem support means is detachably attached to the arm.

3. A support according to claim 1 or claim 2, wherein the arm or arms extend radially outward and upward from the centre axis of the clip

4. A support according to claim 1 or claim 2, wherein the at least one arm comprises two or more longitudinally spaced apart through holes for receiving the stem support means.

5. A support according to claim 3, wherein the at least one arm comprises a longitudinally extending bore for receiving the stem support means.

6. A support according to any one of the preceding claims, wherein the clip has two to five arms.

7. A support according to any one of the preceding claims, wherein the stem support means comprises an elongate body having a first end for supporting the proximal stem of the plant and a second end for attachment to the arm; optionally wherein the first end is formed into a loop, a hook, a V-shape, a U-shape, or a wave shape, for engaging with one or more proximal stems of the plant; optionally wherein the elongate body tapers towards the second end; optionally wherein the first end lies in the same plane as the elongate body.

8. A support according to claim 7, wherein the first end is substantially perpendicular to the longitudinal axis of the elongate body.

9. A support according to any one of the preceding claims, further comprising a stake.

10. A stem support means comprising a rod member having an end portion shaped to receive the proximal stem of a plant to support a flower head in a substantially vertical position and an opposite end portion adapted to be detachably attached to a stake clip.

11. A stem support means according to claim 10, wherein the portion for receiving the proximal stem of a plant is formed into a loop, a hook, a V-shape, a U-shape or a wave form.

12. A clip for placing around a stake to at least partially surround the stake in close contact, comprising a sleeve portion adapted to receive the stake in a displaceable manner having an opening, the clip further comprising at least one arm extending radially outward from a centre axis of the sleeve portion.

13. A stake for fixing in a ground mixture, comprising a first section having one end for fixing in the ground and another opposite end provided with a central hole serving as a female connector or a coaxial stem acting as a male connector, and a second section having one end provided with a central hole serving as a female connector and another opposite end provided with a coaxial stem acting as male connector; optionally further including locking means to lock engaged ends of sections together.

14. A kit for supporting a flower located on a stem of a plant, the kit comprising:
a clip member adapted to be placed around a stake and at least partially surround the stake in close contact, the clip comprising at least one arm extending radially outward from a centre axis of the clip;
one or more stem support means for attachment to the arm; and,
optionally, a stake.

15. A support according to claim 9, or a kit according to claim 14, wherein the stake is as claimed in claim 13.
